(19)

Europäisches
Patentamt
European
Patent Office
Office européen
des brevets

(11) **EP 3 797 599 A1**

(12) **EUROPEAN PATENT APPLICATION**

(43) Date of publication:
**31.03.2021 Bulletin 2021/13**

(51) Int Cl.:
*A23D 9/013* $^{(2006.01)}$ *A23D 9/00* $^{(2006.01)}$

(21) Application number: **20198314.5**

(22) Date of filing: **25.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2019 PCT/JP2019/037887**
**16.04.2020 JP 2020073263**

(71) Applicant: **Showa Sangyo Co., Ltd.**
**Tokyo 101-8521 (JP)**

(72) Inventors:
- **HAKII, Makoto**
  **Chiyoda-ku, Tokyo 101-8521 (JP)**
- **MUTOU, Yuki**
  **Chiyoda-ku, Tokyo 101-8521 (JP)**

(74) Representative: **TBK**
**Bavariaring 4-6**
**80336 München (DE)**

(54) **PLASTIC FAT COMPOSITION AND METHOD FOR PRODUCING THEREOF**

(57)     Provided is a plastic fat composition having satisfactory plasticity in a wide temperature range and having excellent temperature stability.
Disclosed a plastic fat composition mainly containing a liquid oil can be produced by blending 70% by mass or more of an oil that is liquid at 20°C with 5 to 30% by mass of a particular polyglycerol fatty acid ester, or with 3 to 12% by mass of a particular polyglycerol fatty acid ester and 2 to 10% by mass of an extreme hardened oil and/or a wax, then completely melting the mixture, and quenching and kneading the melted mixture.

[Fig.1]

DYNAMIC VISCOELASTIC MEASUREMENT

**Description**

**TECHNICAL FIELD**

The present invention relates to a plastic fat composition having satisfactory plasticity in a wide temperature range and having excellent temperature stability even when palm oil is not used as a main material.

**BACKGROUND ART**

A plastic fat composition is required to have an appropriate hardness and a satisfactory processability and contains, as a part of the material oil and fat, a partially hydrogenated oil and fat prepared by hydrogenation of a natural animal and vegetable oil and fat, or a high- or medium-melting point oil and fat such as beef tallow, lard, and palm oil. The partially hydrogenated oil and fat contains trans-fatty acids generated by isomerization of polyunsaturated fatty acids during hydrogenation. The trans-fatty acid is thought to increase the LDL level in the blood and to increase the risk of cardiovascular disease. Hence, a plastic fat composition free from trans-fatty acids is demanded.

Palm oil that is a medium-melting point oil and fat (having a melting point of 30 to 40°C) gives shape retention properties to a plastic fat composition containing the palm oil, but it is known that a plastic fat composition containing a large amount of the palm oil is gradually hardened during storage, forms coarse crystals, or is easily soluble to have insufficient plasticity at high temperatures. For that, the following improvements have been disclosed: a mixed oil containing palm oil is modified by transesterification, and the transesterificated oil is used in a plastic fat composition (Patent Document 1); and a triglyceride consisting of particular saturated fatty acids is used as a modifying agent for a plastic fat containing palm oil, (Patent Document 2).

Meanwhile, to produce a plastic fat composition containing a larger amount of an animal or vegetable fat and oil free from trans-fatty acids in place of the partially hydrogenated oil and fat, addition of a particular emulsifier to impart preferred physical properties has been proposed.

For example, a margarine and a shortening each containing a polyglycerol fatty acid ester that has an esterification degree of 40% or more and that has a particular molar ratio of the constituent fatty acids and each fatty acid in the constituent fatty acids, and containing 30% or more of an oil and fat that is liquid at 20°C has been known (Patent Document 3).

A plastic fat composition containing 30% or more of an oil that is liquid at 20°C ,and containing a polyglycerol fatty acid ester that has an esterification degree is 60% or more and that has the average polymerization degree of the polyglycerol is 4 or more and that has the content of saturated fatty acids having a particular carbon number range in the constituent fatty acids is in a particular range has been known (Patent Document 4), and the document discloses that a plastic fat composition produced in an example has an improved hardness and plasticity.

Prior Art Documents

Patent Documents

[Patent Document 1] JP-A No. 2010-11799
[Patent Document 2] International Publication WO 2010/119781
[Patent Document 3] JP-B No. 4724094
[Patent Document 4] JP-A No. 2013-110975

**SUMMARY OF THE INVENTION**

Problems to be Solved by the Invention

The palm oil has been widely used as a material of a plastic fat composition. For example, a mixed oil containing the palm oil is modified by transesterification, and the product is used in a plastic fat composition (Patent Document 1); or a triglyceride consisting of particular saturated fatty acids is used as a modifying agent for the palm oil to produce a plastic fat composition (Patent Document 2). The palm oil, however, originally contains 45% by mass or more of saturated fatty acids and also contains 3-monochloropropane-1,2-diol (3-MCPD) fatty acid ester and glycidol fatty acid ester. The saturated fatty acids, the 3-MCPD fatty acid ester, and the glycidol fatty acid ester have not been reported to have harmful effects on human health unlike trans-fatty acids, but it is pointed out that excessive intake thereof causes nutritional problems. Use of an oil and fat that can be taken more safely has been demanded in recent health trends, and use of palm oil tends to be suppressed because farm development of Elaeis guineensis, which is a material of palm oil, causes environmental problems such as deforestation and greenhouse gas emissions.

To produce a plastic fat composition containing larger amounts of animal and vegetable fats and oils free from trans-fatty acids, addition of a particular emulsifier to impart preferred physical properties has been developed, but the margarine and the shortening disclosed in-Patent Document 3 are extremely soft when compared with conventional plastic fat compositions. Patent Document 4 discloses that a plastic fat composition produced in an example has an improved hardness and an improved plasticity, but all the plastic fat compositions produced in examples contain 30% or more of a palm oil that is solid at 20°C, in addition to an oil that is liquid at 20°C, and the document does not disclose that a plastic fat composition containing no palm oil has an improved hardness and an improved plasticity.

The present invention is intended to provide a plastic fat composition having satisfactory plasticity in a wide temperature range and having very suitable physical properties for workability even when palm oil is not used as a main material.

Means for Solving the Problems

The inventors of the present invention have conducted studies to solve the problems, have found that by blending 70% by mass or more of an oil that is liquid at 20°C with 5 to 30% by mass of a particular polyglycerol fatty acid ester to give a mixture, then completely melting the mixture, and quenching and kneading the melted mixture, a plastic fat composition having satisfactory plasticity in a wide temperature range and having improved temperature stability can be produced from the oil that is liquid at 20°C, and have completed the present invention.

The inventors of the present invention have further conducted intensive studies to reduce the amount of an emulsifier, have found that by blending 70% by mass or more of an oil that is liquid at 20°C with 3 to 12% by mass of a polyglycerol fatty acid ester and 2 to 10% by mass of an extreme hardened oil and/or a wax to give a mixture, then completely melting the mixture, and quenching and kneading the melted mixture, a plastic fat composition having satisfactory plasticity in a wide temperature range and having improved temperature stability can also be produced from the oil that is liquid at 20°C even when the emulsifier is used in a small amount, and have completed the present invention.

The plastic fat compositions of the present invention have excellent physical properties as the plastic fat even when both compositions do not mainly contain palm oil.

The present invention relates to plastic fat compositions in the following aspects (1) to (3).

(1) A plastic fat composition includes 70% by mass or more of an oil that is liquid at 20°C and (A) 5 to 30% by mass of a polyglycerol fatty acid ester or (B) 3 to 12% by mass of a polyglycerol fatty acid ester and 2 to 10% by mass of an extreme hardened oil and/or a wax, wherein a total content of the polyglycerol fatty acid ester and the extreme hardened oil and/or the wax being 6% by mass or more, wherein

in the polyglycerol fatty acid ester, a content of a saturated fatty acid having carbon number of 16 to 18 is 90% or more relative to 100% of the constituent fatty acids,

the plastic fat composition contains 40% by mass or less of a saturated fatty acid having carbon number of 16 or more relative to a total mass of the constituent fatty acids in the plastic fat composition, and a difference in common logarithm numerical value of storage elastic moduli at 10°C and 30°C as determined by dynamic viscoelastic measurement is less than 1.0.

(2) The plastic fat composition according to the aspect (1), in which the plastic fat composition is used for a food.

(3) The plastic fat composition according to the aspect (1), in which the plastic fat composition is used for a cosmetic or industry.

The present invention relates to a method for producing a plastic fat composition in the following aspect (4).

(4) A method for producing a plastic fat composition includes mixing 70% by mass or more of an oil that is liquid at 20°C with (A) 5 to 30% by mass of a polyglycerol fatty acid ester to give a mixture, or with (B) 3 to 12% by mass of a polyglycerol fatty acid ester and 2 to 10% by mass of an extreme hardened oil and/or a wax wherein a total content of the polyglycerol fatty acid ester and the extreme hardened oil and/or the wax being 6% by mass or more to give a mixture;

heating and melting the mixture; and

quenching and kneading the melted mixture, wherein

in the polyglycerol fatty acid ester, a content of a saturated fatty acid having carbon number of 16 to 18 is 90% or more relative to 100% of constituent fatty acids,

the plastic fat composition contains 40% by mass or less of a saturated fatty acid having carbon number of 16 or more relative to a total mass of the constituent fatty acids in the plastic fat composition, and a difference in common logarithm numerical value of storage elastic moduli at 10°C and 30°C as determined by dynamic viscoelastic measurement is less than 1.0.

Advantages of the Invention

According to the present invention, by blending 70% by mass or more of an oil that is liquid at 20°C, that is, a low-melting point oil and fat (an oil and fat that is liquid at normal temperature) with 5 to 30% by mass of a particular emulsifier, or with 3 to 12% by mass of a particular emulsifier and 2 to 10% by mass of an extreme hardened oil and/or a wax such that the total amount of the particular emulsifier and the extreme hardened oil and/or the wax is 6% by mass or more, a plastic fat composition can be produced through a simple operation from the low-melting point oil and fat. Even containing 70% by mass or more of an oil that is liquid at 20°C, the plastic fat composition has satisfactory plasticity in a wide temperature range, has very suitable physical properties for workability, is unlikely to cause oil stain, and can be used for foods, cosmetics, and industry. For foods, a plastic fat composition also having satisfactory melting properties in the mouth can be provided.

By adding an extreme hardened oil and/or a wax in place of a part of the particular emulsifier, the amount of the emulsifier can be reduced, and flavor derived from the emulsifier and the cost of the expensive emulsifier can be reduced.

In particular, the difference in common logarithm ($\log_{10} X$) numerical value of storage elastic moduli (Pa) at 10°C and 30°C as determined by dynamic viscoelastic measurement is less than 1.0, preferably 0.7 or less, and more preferably 0.5 or less. Hence, the plastic fat composition of the present invention has a small change in physical properties between 10°C and 30°C, is characteristically unlikely to be affected by temperature changes, and thus has extremely satisfactory workability and preservability.

## BRIEF EXPLANATIONS OF DRAWINGS

Fig. 1 is a graph showing a dynamic viscoelastic measurement result of plastic fat compositions A produced in Example 1, where storage elastic moduli (Pa) are plotted as common logarithm ($\log_{10} X$) against temperatures.
Fig. 2 is a graph showing a dynamic viscoelastic measurement result of plastic fat compositions B produced in Example 2, where storage elastic moduli (Pa) are plotted as common logarithm ($\log_{10} X$) against temperatures.

## EMBODIMENT FOR CARRYING OUT THE INVENTION

A plastic fat composition of the present invention may be either in the form containing substantially no aqueous phase or in the form containing an aqueous phase. Examples of the form containing substantially no aqueous phase include shortening. The shortening has a water content (containing a volatile matter) of 0.5% by mass or less. Examples of the form containing an aqueous phase include margarine and fat spread. The margarine has an oil and fat content of 80% by mass or more in an oil and fat composition, and the fat spread has an oil and fat content of less than 80% by mass. When the plastic fat composition of the present invention is margarine or fat spread, the aqueous phase content is preferably 35% by mass or less.

The oil that is liquid at 20°C used in the plastic fat composition of the present invention may be any low-melting point oil and fat. Examples include soybean oil, high-oleic soybean oil, rapeseed oil, high-oleic rapeseed oil, corn oil, sesame oil, perilla oil, linseed oil, peanut oil, safflower oil, high-oleic safflower oil, cottonseed oil, grape seed oil, macadamia nut oil, hazelnut oil, almond oil, cashew nut oil, pumpkin seed oil, walnut oil, apricot oil, camellia oil, tea seed oil, perilla oil, olive oil, mustard oil, rice oil, wheat germ oil, borage oil, avocado oil, kaya oil, sunflower oil, high-oleic sunflower oil, echium oil, fish oil, algae oil, and fractionated oils and fats from them. Synthetic oils and fats such as triethylhexanoin, isodecyl neopentanoate, and medium-chain triglyceride (MCT) can also be used. These oils and fats may be used singly or in combination of two or more of them.

Many oils and fats having a melting point of 25°C or more, such as palm oil, coconut oil, and butter, have a high saturated fatty acid content, then any oil that is liquid at 20°C above is preferably used. An oil and fat containing 35% by mass or less of saturated fatty acids having carbon number of 16 or more is preferred, an oil and fat containing 30% by mass or less of the saturated fatty acids is more preferred, and an oil and fat containing 25% by mass or less of the saturated fatty acids is even more preferred.

In 100% by mass of the plastic fat composition of the present invention, the oil that is liquid at 20°C is preferably contained at a content of 70% by mass or more and more preferably at a content of 80% by mass or more.

When the plastic fat composition is in the form containing substantially no aqueous phase, the oil that is liquid at 20°C is preferably contained at a content of 70 to 95% by mass and more preferably at a content of 80 to 93% by mass.

When the plastic fat composition is in the form containing an aqueous phase, the oil that is liquid at 20°C is preferably contained at a content of 70 to 90% by mass.

The extreme hardened oil used in the plastic fat composition of the present invention is not limited to particular extreme hardened oils, and examples include extreme hardened soybean oil, extreme hardened rapeseed oil, extreme hardened high-erucic acid rapeseed oil, extreme hardened sunflower oil, extreme hardened palm oil, extreme hardened beef tallow, extreme hardened lard, extreme hardened castor oil, and extreme hardened rice oil. These oils and fats may be used singly or in combination of two or more of them. The extreme hardened oil is a solid oil and fat consisting of 100% saturated fatty acid, thus is suitable to impart hardness to a liquid oil, and can reduce the amount of the polyglycerol fatty acid ester as the emulsifier.

The wax used in the plastic fat composition of the present invention is not limited to particular waxes, and examples include sunflower wax, rice wax, candelilla wax, carnauba wax, beeswax, Japan wax, and spermaceti. These waxes may be used singly or in combination of two or more of them. Among them, sunflower wax is preferred. The wax is suitable to impart hardness to a liquid oil, and can reduce the amount of the polyglycerol fatty acid ester as the emulsifier.

In the polyglycerol fatty acid ester as the emulsifier contained in the plastic fat composition of the present invention, the content of saturated fatty acids having carbon number of 16 to 18 is 90% or more relative to 100% of the constituent fatty acids. The saturated fatty acids having carbon number of 16 to 18 are preferably palmitic acid (carbon number of 16) and stearic acid (carbon number of 18). The content of palmitic acid is preferably 20 to 40% and more preferably 27 to 37%. The content of stearic acid is preferably 60 to 80% and more preferably 63 to 73%.

The esterification degree of the polyglycerol fatty acid ester of the present invention is not limited to particular values but is preferably 60% or more and more preferably 70% or more.

The average polymerization degree of the polyglycerol constituting the polyglycerol fatty acid ester of the present invention is not limited to particular values, but is preferably 3 or more, more preferably 6 or more, even more preferably 8 or more, and most preferably 10. In the description, the average polymerization degree (n) can be calculated in accordance with Formula (1) and Formula (2).

$$\text{Molecular weight} = 74n + 18 \qquad (1)$$

$$\text{Hydroxyl group value} = 56110\,(n + 2)/\text{molecular weight} \qquad (2)$$

The polyglycerol fatty acid ester is an esterification product of a polyglycerol and a fatty acid and is produced by a known esterification reaction, for example. The production method is specifically disclosed in Patent Document 4.

In 100% by mass of the plastic fat composition of the present invention, the polyglycerol fatty acid ester as the emulsifier is contained at a content of 5 to 30% by mass. If the content is less than 5% by mass, a plastic fat composition has poor plasticity and causes oil stain. If the content is 30% by mass or more, a plastic fat composition has poor plasticity, and a plastic fat composition for foods also has poor melting properties in the mouth. In addition, the polyglycerol fatty acid ester has a high saturated fatty acid content, and thus such a plastic fat composition contains saturated fatty acids having carbon number of 16 or more at a high content.

When the plastic fat composition of the present invention is in the form containing substantially no aqueous phase, the polyglycerol fatty acid ester as the emulsifier is preferably contained at a content of 5 to 30% by mass. The content is more preferably 7% by mass or more, even more preferably 8% by mass or more, and still more preferably 10% by mass or more. The content is more preferably 25% by mass or less, even more preferably 20% by mass or less, and still more preferably 18% by mass or less. When the plastic fat composition is in the form containing an aqueous phase, the polyglycerol fatty acid ester as the emulsifier is preferably contained at a content of 5 to 30% by mass. The content is more preferably 7% by mass or more, even more preferably 8% by mass or more, and still more preferably 10% by mass or more. The content is more preferably 25% by mass or less, even more preferably 20% by mass or less, and still more preferably 18% by mass or less.

Alternatively, in 100% by mass of the plastic fat composition of the present invention, the polyglycerol fatty acid ester as the emulsifier is contained at a content of 3 to 12% by mass, and the extreme hardened oil and/or wax are contained at a content of 2 to 10% by mass. By blending the extreme hardened oil and/or wax, the content of the polyglycerol fatty acid ester as the emulsifier can be reduced, and flavor derived from the emulsifier can be suppressed.

In this case, if the content of the polyglycerol fatty acid ester is less than 3% by mass, and the content of the extreme hardened oil and/or wax is less than 3% by mass, a plastic fat composition has poor plasticity and causes much oil stain. Hence, the total content of the polyglycerol fatty acid ester and the extreme hardened oil and/or wax is required to be 6% by mass or more. And if the content of the polyglycerol fatty acid ester is more than 12% by mass, and the content of the extreme hardened oil and/or wax is more than 10% by mass, a plastic fat composition has poor melting properties in the mouth when used for foods. The content of the polyglycerol fatty acid ester is more preferably 4 to 10% by mass and even more preferably 5 to 9% by mass, and the content of the extremy hardened oil and/or wax is more preferably 2 to 7% by mass.

The content ratio between the polyglycerol fatty acid ester and the extreme hardened oil and/or wax is not limited to particular values, but the polyglycerol fatty acid ester is preferably contained at the same content as the extreme hardened oil and/or wax, or the polyglycerol fatty acid ester is preferably contained at a larger content than the extreme hardened oil and/or wax.

As the method for producing the plastic fat composition of the present invention, any known method can be used.

When the plastic fat composition is in the form containing substantially no aqueous phase, an oil that is liquid at 20°C is mixed with a polyglycerol fatty acid ester or with a polyglycerol fatty acid ester and an extreme hardened oil and/or a wax, then the mixture is heated and melted at 50 to 80°C, preferably 60 to 70°C, and if desired, an emulsifier other than the polyglycerol fatty acid ester of the present invention, an organic acid, an antioxidant, an antioxidant auxiliary, a coloring agent, a flavoring agent, an antifoaming agent, or the like is added. The resulting solution is quenched and kneaded with a quenching kneader to continuously perform crystallization and kneading of the oil and fat, giving a plastic fat composition. The composition is then preferably tempered at 10 to 30°C for 24 to 72 hours.

When the plastic fat composition is in the form containing an aqueous phase, an oil that is liquid at 20°C is mixed with a polyglycerol fatty acid ester or with a polyglycerol fatty acid ester and an extreme hardened oil and/or a wax, then the mixture is heated and melted at 50 to 80°C, preferably 60 to 70°C, and if desired, an emulsifier other than the polyglycerol fatty acid ester of the present invention, an antioxidant, an antioxidant auxiliary, an antifoaming agent, an emulsion stabilizer, a seasoning, a coloring agent, a flavoring agent, a thickening agent, a preservative, a reinforcement, or the like is added, giving an oil phase. Separately, to purified water, if desired, a dairy product, common salt, a sugar, an acidulant, or the like is added, and the mixture is heated and melted at 50 to 60°C, giving an aqueous phase. Next, the oil phase and the aqueous phase are mixed and stirred, and the resulting mixed liquid is quenched and kneaded with a quenching kneader to continuously perform crystallization and kneading of the oil and fat, giving a plastic fat composition. The composition is then preferably tempered at 10 to 30°C for 24 to 72 hours.

A typical quenching kneader includes two units, a first unit of a tube-shaped scraped surface heat exchanger and a second unit of a tube having an appropriate structure for the type of a product and for a purpose. For example, for shortening, a kneader having pins on the inner wall of a tube and on a shaft is used, and for margarine or fat spread, a tube having a wire mesh in a hollow tube or inside the tube is used.

The plastic fat composition of the present invention may be used for any purpose. The composition for foods can be used for raw foods, confectionery or breadmaking, buttercream, spread, fried foods, processed meat products, fish paste products, or the like. The composition for raw foods is intended to be eaten without heat and can be used like butter or margarine. Examples of the composition for confectionery or breadmaking include a composition for roll-in and a composition for kneading. The composition for roll-in is used to be inserted in dough for confectionery or bread, and the composition for kneading is used to be kneaded in dough for confectionery or bread. The composition for processed meat products or the composition for fish paste products is used to be added when a mixture for hamburger steak, ham, sausage, fish paste products such as kamaboko and chikuwa, or the like is prepared, and can also be used for artificial foods of processed meat products or fish paste products mainly containing vegetable materials. The composition can also be used for products other than foods and can be used for cosmetics such as skin-care cosmetics, makeup cosmetics, hair-care cosmetics, hair-makeup cosmetics, body-care cosmetics, and fragrance and for industrial use such as grease. When free from palm oil, the composition is usable as a material for vegans.

Examples

The present invention will next be specifically described with reference to examples, but the present invention is not limited to the examples.

In examples or comparative examples described as test examples, an emulsifier A or an emulsifier B was used as a polyglycerol fatty acid ester. The emulsifier A is a polyglycerol fatty acid ester of the present invention (having an HLB of 1.7, a melting point of 53°C, a palmitic acid content of 32%, and a stearic acid content of 67%, manufactured by Riken Vitamin Co., Ltd.). The emulsifier B is a polyglycerol fatty acid ester (trade name: TAISET50, having a palmitic acid content of 2% and a stearic acid content of 58%, manufactured by Taiyo Kagaku Corporation) that is not the polyglycerol fatty acid ester of the present invention. Each fatty acid composition of the emulsifiers A and B was determined by the fatty acid analytical method shown below.

Oils that are liquid at 20°C and were used in the examples, and the contents of saturated fatty acids thereof having carbon number of 16 or more are shown below. The contents of saturated fatty acids having carbon number of 16 or more were determined by the fatty acid analytical method shown below.

Canola oil (Showa Sangyo Co., Ltd.): 6.2% by mass
Cottonseed oil (Showa Sangyo Co., Ltd.): 21.2% by mass
High-oleic sunflower oil (Showa Sangyo Co., Ltd.): 6.9% by mass
Olive oil (Showa Sangyo Co., Ltd.): 13.7% by mass

Palm olein (IV60) (Showa Sangyo Co., Ltd.): 41.9% by mass
Palm olein (IV67) (Showa Sangyo Co., Ltd.): 36.6% by mass
Palm medium-melting fractionated oil and fat (IV45) (Taiyo Yushi Corp.): 55.1% by mass
Triethylhexanoin (Kokyu Alcohol Kogyo Co., Ltd.): 0% by mass
Isodecyl neopentanoate (Kokyu Alcohol Kogyo Co., Ltd): 0% by mass
MCT (Bio Actives Japan): 0% by mass

The extreme hardened oils and the waxes used were all products manufactured by Yokozeki Yushi Kogyo. Triethylhexanoin, isodecyl neopentanoate, extreme hardened castor oi, and purified sunflower wax are non-food oils and fats.

[Analytical method]

(1) Fatty acid analysis

The content of saturated fatty acids having carbon number of 16 or more in a plastic fat composition was determined in accordance with Standard Methods for the Analysis of Fats, Oils and Related Materials, 2.4.2.3-2013, Fatty acid composition, by analyzing a sample by capillary gas chromatography.

(2) Measurement of dynamic viscoelasticity

For the measurement of dynamic viscoelasticity, Modular Compact Rheometer MCR102 manufactured by AntonPaar was used. Temperature dependent storage elastic moduli (Pa) of a sample were measured by using a parallel-plate jig having a diameter of 25 mm as the jig in conditions of a gap of 1 mm, a frequency of 1.0 rad/sec, and a distortion of 0.05% while the sample temperature was increased from 5°C to 50°C at 2°C/min.

(3) Measurement of rupture stress

For the measurement of rupture stress (g), Texture Analyser TA TXplus manufactured by EKO Instruments was used. The temperature of a sample packed in a container was adjusted at 15°C or 25°C, and a jig having a diameter of 1 mm was allowed to intrude at 0.5 mm/sec by 12 mm from the surface to measure rupture stress (g).

[Evaluation criteria]

(1) Plasticity evaluation

A sample at normal temperature was placed on a spatula, and the plasticity when the sample on the spatula was spread on paper was evaluated by a panel of experts on the basis of the following evaluation criteria.

Evaluation criteria

A: Very good
B: Good
C: Slightly poor
D: Poor

(2) Oil stain evaluation

A sample at normal temperature was placed on a spatula and was spread on paper, and then oil stain was visually evaluated by a panel of experts on the basis of the following evaluation criteria.

Evaluation criteria

A: Very good without any oil stain

B: Good with a little oil stain
C: Acceptable with some oil stain
D: Poor with much oil stain

(3) Evaluation of melting properties in mouth

A panel of ten experts performed sensory evaluation on the basis of the following evaluation criteria, and the average was calculated and rounded from the second decimal place, giving an evaluation point.

Evaluation criteria

5: Very good
4: Good
3: Acceptable
2: Slightly poor
1: Poor

[Example 1]

[Production of plastic fat composition A]

An oil and fat and an emulsifier were mixed at a mixing ratio of Test Examples 1 to 18 shown in Table 2 and Table 3, then the mixture was completely melted at 60°C, and the melted mixture was quenched and kneaded with a quenching kneader. By using AGI HOMOMIXER 2M-1 manufactured by PRIMIX Corporation as the quenching kneader, the mixture was cooled from 60°C to 20°C in conditions of a refrigerant temperature of -10°C, a paddle mixer rate of 150 rpm, and a homomixer rate of 10,000 rpm, giving plastic fat compositions A of Test Examples 1 to 18.
The content of saturated fatty acids having carbon number of 16 or more, the dynamic viscoelasticity, and the rupture stress of each plastic fat composition A were determined by the above analytical methods, and the plasticity, the oil stain, and the melting properties in the mouth were evaluated on the basis of the above evaluation criteria.
Test Examples 1 to 7 and 9 to 11 correspond to examples of the present invention, and Test Examples 8 and 12 to 18 correspond to comparative examples.
Table 1 shows analytical results and evaluation results of Reference Example 1 in which Snow Brand Hokkaido Butter, Salt-free (Megmilk Snow Brand Co., Ltd.) was used and of Reference Example 2 in which Premix Oil 150 (Showa Sangyo Co., Ltd.) as shortening was used.
Table 2 and Table 3 show the mixing ratio between an oil and fat and an emulsifier, the analytical results, and the evaluation results of each plastic fat composition A of Test Examples 1 to 18.

[Table 1]

| | | Reference Example 1 | Reference Example 2 |
|---|---|---|---|
| Snow Brand Hokkaido Butter, Salt-free | | 100.0 | - |
| Premix Oil 150 | | - | 100.0 |
| Content of saturated fatty acids having a carbon number of 16 or more (% by mass) | | 55.6 | 39.0 |
| Common logarithm ($\log_{10} \times$) of storage elastic modulus (Pa) | 10°C | 6.8 | 5.6 |
| | 30°C | 3.1 | 4.4 |
| | Difference between 10°C and 30°C | 3.7 | 1.2 |
| Rupture stress (g) | 15°C | 2510.0 | 2441.1 |
| | 25°C | 125.3 | 657.8 |

(continued)

| | | Reference Example 1 | Reference Example 2 |
|---|---|---|---|
| Evaluation | Plasticity | A | A |
| | Oil stain | A | A |
| | Melting properties in mouth | 3.4 | 3.0 |

[Table 2]

| | | Test Example 1 | Test Example 2 | Test Example 3 | Test Example 4 | Test Example 5 | Test Example 6 | Test Example 7 | Test Example 8 |
|---|---|---|---|---|---|---|---|---|---|
| Canola oil | | 95.0 | 92.5 | 90.0 | 85.0 | 80.0 | 75.0 | 70.0 | 65.0 |
| Emulsifier A | | 5.0 | 7.5 | 10.0 | 15.0 | 20.0 | 25.0 | 30.0 | 35.0 |
| Content of saturated fatty acids having a carbon number of 16 or more (% by mass) | | 10.4 | 12.5 | 14.7 | 18.9 | 23.1 | 27.3 | 31.6 | 35.8 |
| Common logarithm ($\log_{10} \times$) of storage elastic modulus (Pa) | 10°C | 3.8 | 4.4 | 5.1 | 5.6 | 6.2 | 6.4 | 6.5 | 7.0 |
| | 30°C | 3.1 | 3.9 | 4.7 | 5.2 | 5.7 | 6.2 | 6.3 | 7.8 |
| | Difference between 10°C and 30°C | 0.7 | 0.5 | 0.4 | 0.4 | 0.5 | 0.2 | 0.2 | 0.2 |
| Rupture stress (g) | 15°C | 11.9 | 49.0 | 126.3 | 682.3 | 1474.4 | 2616.4 | 3359.6 | 4919.4 |
| | 25°C | Measurement lower limit | 9.6 | 74.5 | 214.7 | 478.4 | 694.8 | 1261.9 | 1418.7 |
| Evaluation | Plasticity | B | B | A | A | B | B | B | D |
| | Oil stain | C | B | A | A | A | A | A | A |
| | Melting properties in mouth | 5.0 | 5.0 | 5.0 | 4.7 | 4.3 | 3.2 | 3.0 | 2.0 |

[Table 3]

| | Test Example 9 | Test Example 10 | Test Example 11 | Test Example 12 | Test Example 13 | Test Example 14 | Test Example 15 | Test Example 16 | Test Example 17 | Test Example 18 |
|---|---|---|---|---|---|---|---|---|---|---|
| Canola oil | - | - | - | - | - | - | 58.2 | 55.0 | 90.0 | 90.0 |
| Cottonseed oil | 90.0 | - | - | - | - | - | - | - | - | - |
| High-oleic sunflower oil | - | 90.0 | - | - | - | - | - | - | - | - |
| Olive oil | - | - | 90.0 | - | - | - | - | - | - | - |
| Palm oil | - | - | - | - | - | - | 38.8 | 35.0 | - | - |
| Palm olein (IV67) | - | - | - | 90.0 | - | - | - | - | - | - |
| Palm olein (IV60) | - | - | - | - | 90.0 | - | - | - | 10.0 | - |
| Palm medium-melting fractionated oil and fat (IV45) | - | - | - | - | - | 90.0 | - | - | - | - |
| Emulsifier A | 10.0 | 10.0 | 10.0 | 10.0 | 10.0 | 10.0 | 3.0 | 10.0 | - | - |
| Emulsifier B | - | - | - | - | - | - | - | - | - | - |
| Extreme hardened rapeseed oil | - | - | - | - | - | - | - | - | - | 10.0 |
| Content of saturated fatty acids having a carbon number of 16 or more (% by mass) | 28.2 | 15.3 | 21.4 | 42.0 | 46.8 | 58.6 | 24.6 | 29.0 | 13.7 | 15.6 |
| Common logarithm ($\log_{10}\times$) of storage elastic modulus (Pa) — 10°C | 5.1 | 5.1 | 5.3 | 5.0 | 5.6 | 7.3 | 5.2 | 5.5 | 4.9 | 5.7 |
| Common logarithm ($\log_{10}\times$) of storage elastic modulus (Pa) — 30°C | 4.7 | 4.8 | 4.9 | 4.2 | 4.5 | 4.9 | 3.5 | 4.5 | 3.5 | 4.8 |
| Common logarithm ($\log_{10}\times$) of storage elastic modulus (Pa) — Difference between 10°C and 30°C | 0.4 | 0.3 | 0.4 | 0.7 | 1.2 | 2.4 | 1.7 | 1.0 | 1.4 | 0.9 |
| Rupture stress (g) — 15°C | 135.4 | 131.1 | 129.8 | 90.1 | 321.2 | 5012.8 | 66.7 | 400.4 | 234.2 | 634.2 |
| Rupture stress (g) — 25°C | 70.2 | 77.8 | 80.1 | 55.6 | 118.5 | 1465.3 | 19.6 | 161.6 | 19.1 | 89.1 |
| Plasticity | A | A | A | A | B | D | B | B | D | B |
| Evaluation | A | A | A | A | B | D | B | B | D | B |

(continued)

| | | Test Example 9 | Test Example 10 | Test Example 11 | Test Example 12 | Test Example 13 | Test Example 14 | Test Example 15 | Test Example 16 | Test Example 17 | Test Example 18 |
|---|---|---|---|---|---|---|---|---|---|---|---|
| | Oil stain | A | A | A | A | A | A | B | A | D | B |
| | Melting properties in mouth | 5.0 | 5.0 | 5.0 | 4.8 | 4.2 | 2.0 | 4.0 | 3.5 | 4.0 | 2.0 |

[Analytical result]

The content of saturated fatty acids having carbon number of 16 or more relative to the total mass of constituent fatty acids in each plastic fat composition A was determined. The emulsifier of the present invention has a high content of saturated fatty acids having carbon number of 16 or more. Hence, as the emulsifier content increased, the content of the saturated fatty acids having carbon number of 16 or more was likely to increase in the plastic fat composition, but in each of Test Examples 1 to 11 in which only the oil that was liquid at 20°C was used, the content of saturated fatty acids having carbon number of 16 or more was 40% by mass or less.

In contrast, in each of Test Examples 12 to 14 in which palm oil or an oil and fat derived from palm (palm olein, palm medium-melting fractionated oil and fat) was used, the content of saturated fatty acids having carbon number of 16 or more was 40% by mass or more.

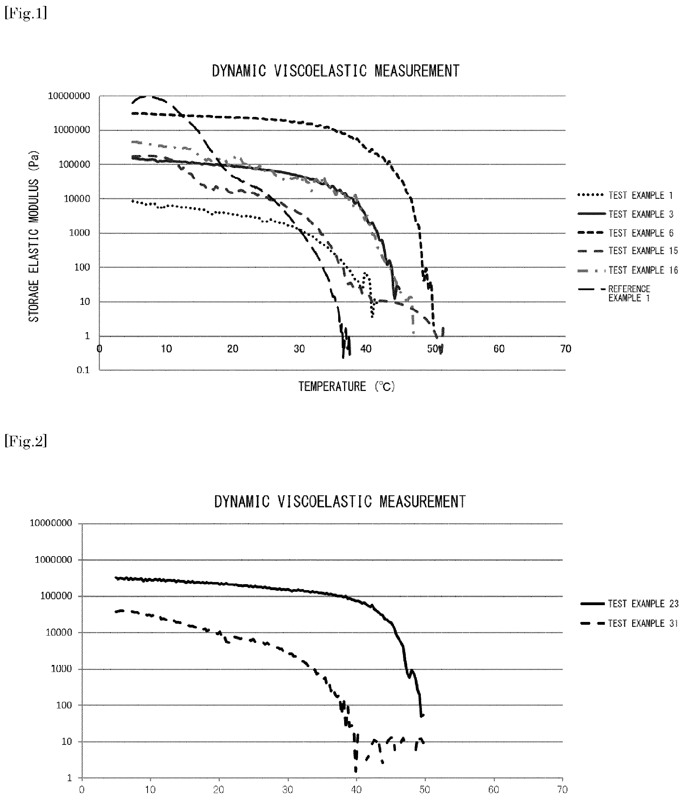

Next, Fig. 1 shows dynamic viscoelasticity measurement indicated by the storage elastic modulus result of the plastic fat compositions A at various temperatures, where storage elastic moduli are plotted as common logarithm ($\log_{10}X$) numerical value on the vertical axis against temperatures on the horizontal axis. As reference, the test result of butter (Reference Example 1) is also shown, and the storage elastic modulus suddenly dropped when the temperature exceeded 25°C.

The room temperature range is regarded as 10°C to 30°C, and common logarithms numerical value of the storage elastic moduli of a sample at 10°C and 30°C and a difference of the logarithms numerical value are shown in Tables 1 to 3. In Test Examples 1 to 12 and Test Example 18, the differences are less than 1, and this indicates that the compositions are unlikely to be affected by temperature changes and maintain stable dynamic viscoelasticity.

In contrast, in Test Examples 13 to 17, the difference in common logarithm numerical value of storage elastic moduli at 10°C and 30°C is 1 or more, and this indicates that the compositions are affected by temperature changes within a normal temperature range, and the dynamic viscoelasticity is unstable.

The rupture stress is stress against a perpendicular force and is an index of the hardness. When a plastic fat composition had a high rupture stress and was excessively hard (for example, Test Example 8 and Test Example 14), the oil and fat failed to be spread and had poor plasticity evaluation. In Test Example 17, the rupture stress was low, but when the oil and fat was spread, the oil and fat was melted and turned from a solid form into a sleet-like form and had poor evaluation for plasticity and oil stain.

[Evaluation result]

The plastic fat composition of the present invention containing 85 to 90% by mass of an oil that is liquid at 20°C and containing 15 to 10% by mass of a polyglycerol fatty acid ester was evaluated as "very good" for each of plasticity, oil stain, and melting properties in the mouth. The plastic fat compositions of the present invention other than the above compositions were also comprehensively evaluated as good for plasticity, oil stain, and melting properties in the mouth.

[Example 2]

[Production of plastic fat composition B]

An oil and fat and an emulsifier were mixed at a mixing ratio of Test Examples 19 to 31 shown in Table 4, then the mixture was completely melted at 60°C, and the melted mixture was quenched and kneaded with a quenching kneader. By using AGI HOMOMIXER 2M-1 manufactured by PRIMIX Corporation as the quenching kneader, the mixture was cooled from 60°C to 10°C in conditions of a refrigerant temperature of -10°C, a paddle mixer rate of 150 rpm, and a homomixer rate of 8,500 rpm, and the cooled mixture was tempered at 25°C for 24 hours, giving plastic fat compositions B of Test Examples 19 to 31.

The content of saturated fatty acids having carbon number of 16 or more, the dynamic viscoelasticity, and the rupture stress of each plastic fat composition B were determined by the above analytical methods, and the plasticity, the oil stain, and the melting properties in the mouth were evaluated on the basis of the above evaluation criteria.

Test Examples 20 to 25 and 27 to 30 correspond to examples of the present invention, and Test Examples 19, 26, and 31 correspond to comparative examples.

Table 4 shows the mixing ratio between an oil and fat and an emulsifier, the analytical results, and the evaluation results of each plastic fat composition B of Test Examples 19 to 31.

[Table 4]

| | | Test Example 19 | Test Example 20 | Test Example 21 | Test Example 22 | Test Example 23 | Test Example 24 | Test Example 25 | Test Example 26 | Test Example 27 | Test Example 28 | Test Example 29 | Test Example 30 | Test Example 31 |
|---|---|---|---|---|---|---|---|---|---|---|---|---|---|---|
| Canola oil | | 94.2 | 92.0 | 94.0 | 93.0 | 91.0 | 84.0 | 80.0 | 76.0 | 91.0 | 91.0 | 91.0 | 91.0 | 58.2 |
| Palm oil | | - | - | - | - | - | - | - | - | - | - | - | - | 38.8 |
| Emulsifier A | | 2.9 | 3.0 | 4.0 | 5.0 | 6.0 | 9.0 | 11.0 | 13.0 | 6.0 | 6.0 | 6.0 | 6.0 | 1.5 |
| Extreme hardened rapeseed oil | | 2.9 | 5.0 | 2.0 | 2.0 | 3.0 | 7.0 | 9.0 | 11.0 | - | - | - | - | - |
| Extreme hardened high-erucic acid rapeseed oil | | - | - | - | - | - | - | - | - | 3.0 | - | - | - | - |
| Extreme hardened soybean oil | | - | - | - | - | - | - | - | - | - | 3.0 | - | - | - |
| Extreme hardened palm oil | | - | - | - | - | - | - | - | - | - | - | 3.0 | - | 1.5 |
| Extreme hardened beef tallow | | - | - | - | - | - | - | - | - | - | - | - | 3.0 | - |
| Content of saturated fatty acids having a carbon number of 16 or more (% by mass) | | 11.4 | 13.4 | 11.5 | 12.3 | 14.1 | 20.4 | 23.9 | 27.5 | 14.1 | 14.1 | 14.1 | 14.1 | 24.7 |
| Common logarithm (log₁₀×) of storage elastic modulus (Pa) | 10°C | 3.3 | 3.8 | 4.6 | 4.5 | 5.2 | 5.4 | 5.5 | 4.9 | 5.3 | 5.1 | 4.9 | 5.1 | 4.5 |
| | 30°C | 3.1 | 3.6 | 4.2 | 4.1 | 4.9 | 5.2 | 5.2 | 4.6 | 4.9 | 4.7 | 4.5 | 4.7 | 3.4 |
| | Difference between 10°C and 30°C | 0.2 | 0.2 | 0.4 | 0.4 | 0.3 | 0.2 | 0.3 | 0.3 | 0.4 | 0.4 | 0.4 | 0.4 | 1.1 |
| Rupture stress (g) | 15°C | 3.6 | 17.5 | 30.8 | 32.5 | 90.9 | 103.5 | 179.0 | 301.6 | 133.2 | 82.6 | 55.1 | 71.2 | 15.0 |
| | 25°C | 2.8 | 13.8 | 24.5 | 25.7 | 81.2 | 146.6 | 220.8 | 290.5 | 140.3 | 69.8 | 48.9 | 58.2 | 7.5 |
| Evaluation | Plasticity | D | B | A | A | A | A | A | A | A | A | A | A | B |
| | Oil stain | D | B | B | A | A | A | A | A | A | A | A | A | C |
| | Melting properties in mouth | 5.0 | 5.0 | 5.0 | 5.0 | 5.0 | 4.9 | 4.3 | 2.7 | 5.0 | 5.0 | 5.0 | 5.0 | 5.0 |

[Analytical result]

The content of saturated fatty acids relative to the total mass of constituent fatty acids in each plastic fat composition B was determined. The emulsifier of the present invention has a high content of saturated fatty acids having carbon number of 16 or more, and the extreme hardened oil has a saturated fatty acid content of 100% by mass. Hence, as the emulsifier content and the extreme hardened oil content increased, the saturated fatty acid content was likely to increase in the plastic fat composition, but in each of Test Examples 19 to 31, the content of saturated fatty acids having carbon number of 16 or more was 40% by mass or less.

Next, Fig. 2 shows dynamic viscoelasticity measurement indicated by the storage elastic modulus result of the plastic fat compositions at various temperatures, where storage elastic moduli are plotted as common logarithm ($\log_{10}X$) numerical value on the vertical axis against temperatures on the horizontal axis.

The room temperature range is regarded as 10°C to 30°C, and common logarithms numerical value of the storage elastic moduli of a sample at 10°C and 30°C and a difference of the logarithms numerical value are shown in Table 4. In Test Examples 19 to 30, the differences are less than 1, and this indicates that the compositions are unlikely to be affected by temperature changes and maintain stable dynamic viscoelasticity.

In contrast, in Test Example 31 shown in Fig. 2, the difference in common logarithm numerical value of storage elastic moduli at 10°C and 30°C is 1 or more, and this indicates that the composition is affected by temperature changes within a normal temperature range, and the dynamic viscoelasticity is unstable.

The rupture stress is stress against a perpendicular force and is an index of the hardness. At 25°C and 15°C, Test Examples 20 to 30 had appropriate rupture stresses, and it was thus ascertained that the oils and fats were easily spread and had satisfactory plasticity. Test Example 19 had a low rupture stress and poor plasticity. The oil stain evaluation was also poor.

[Evaluation result]

The plastic fat composition of the present invention containing 84 to 93% by mass of an oil that is liquid at 20°C, 5 to 9% by mass of a polyglycerol fatty acid ester, and 2 to 7% by mass of an extreme hardened oil was evaluated as "very good" for each of plasticity, oil stain, and melting properties in the mouth. The plastic fat compositions of the present invention other than the above compositions were also comprehensively evaluated as good for plasticity, oil stain, and melting properties in the mouth. When 96% by mass of an oil that is liquid at 20°C, 1.5% by mass of an extreme hardened oil, and 2.5% by mass of a polyglycerol fatty acid ester were mixed, the oil and fat was not solidified and was not able to be evaluated as a plastic fat composition.

[Production of plastic fat composition C]

Plastic fat compositions C were produced at mixing ratios of Test Examples 32 to 36 shown in Table 5 by a similar production method to that for the plastic fat composition B.

The content of saturated fatty acids having carbon number of 16 or more and the dynamic viscoelasticity of each plastic fat composition C were determined by the above analytical methods, and the plasticity and the oil stain were evaluated on the basis of the above evaluation criteria.

Test Examples 32 to 36 correspond to examples of the present invention.

Table 5 shows the mixing ratio between an oil and fat and an emulsifier, the analytical results, and the evaluation results of each plastic fat composition C of Test Examples 32 to 36.

[Table 5]

|  | Test Example 32 | Test Example 33 | Test Example 34 | Test Example 35 | Test Example 36 |
|---|---|---|---|---|---|
| Triethylhexanoin | 91.0 | - | - | - | - |
| Isodecyl neopentanoate | - | 91.0 | - | - | - |
| MCT | - | - | 91.0 | - | - |
| Rapeseed oil | - | - | - | 91.0 | 91.0 |
| Emulsifier A | 6.0 | 6.0 | 6.0 | 6.0 | 6.0 |
| Extreme hardened rapeseed oil | 3.0 | 3.0 | 3.0 | - | - |

(continued)

|  | | Test Example 32 | Test Example 33 | Test Example 34 | Test Example 35 | Test Example 36 |
|---|---|---|---|---|---|---|
| Extreme hardened castor oi | | - | - | - | 3.0 | - |
| Purified sunflower wax | | - | - | - | - | 3.0 |
| Content of saturated fatty acids having a carbon number of 16 or more (% by mass) | | 8.4 | 8.4 | 8.4 | 14.1 | 14.1 |
| Common logarithm ($\log_{10}\times$) of storage elastic modulus (Pa) | 10°C | 4.9 | 4.8 | 5.0 | 5.0 | 4.9 |
| | 30°C | 4.5 | 4.2 | 4.6 | 4.5 | 4.2 |
| | Difference between 10°C and 30°C | 0.4 | 0.6 | 0.4 | 0.5 | 0.7 |
| Evaluation | Plasticity | A | A | A | A | A |
| | Oil stain | A | A | A | A | A |

[Analytical result]

The content of saturated fatty acids having carbon number of 16 or more relative to the total mass of constituent fatty acids in each plastic fat composition C was determined. In each of Test Examples 32 to 36, the content of saturated fatty acid having carbon number of 16 or more was 40% by mass or less.

The room temperature range is regarded as 10°C to 30°C, and common logarithms numerical value of the storage elastic moduli of a sample at 10°C and 30°C and a difference of the logarithms numerical value are shown in Table 5. In Test Examples 32 to 36, the differences are less than 1, and this indicates that the compositions are unlikely to be affected by temperature changes and maintain stable dynamic viscoelasticity.

[Evaluation result]

The plasticity and the oil stain of each plastic fat composition C were evaluated as very good.

Industrial Applicability

According to the present invention, by blending 70% by mass or more of an oil that is liquid at 20°C with 5 to 30% by mass of a particular emulsifier or with 3 to 12% by mass of a particular emulsifier and 2 to 10% by mass of an extreme hardened oil and/or a wax, a plastic fat composition can be produced through a simple operation from the low-melting point oil and fat.

The plastic fat composition produced as above has satisfactory plasticity in a wide temperature range and has very suitable physical properties for workability. The content of trans-fatty acids is also reduced. The plastic fat composition of the present invention can be used as food oils and fats for raw foods, bakery, buttercream, spread, fried foods, processed meat products, fish paste products, and the like, as oils and fats for cosmetics, and as oils and fats for industrial use.

Provided is a plastic fat composition having satisfactory plasticity in a wide temperature range and having excellent temperature stability.

Disclosed a plastic fat composition mainly containing a liquid oil can be produced by blending 70% by mass or more of an oil that is liquid at 20°C with 5 to 30% by mass of a particular polyglycerol fatty acid ester, or with 3 to 12% by mass of a particular polyglycerol fatty acid ester and 2 to 10% by mass of an extreme hardened oil and/or a wax, then completely melting the mixture, and quenching and kneading the melted mixture.

**Claims**

1. A plastic fat composition comprising:
   70% by mass or more of an oil that is liquid at 20°C and;

(A) 5 to 30% by mass of a polyglycerol fatty acid ester, or
(B) 3 to 12% by mass of a polyglycerol fatty acid ester and 2 to 10% by mass of an extreme hardened oil and/or a wax, wherein a total content of the polyglycerol fatty acid ester and the extreme hardened oil and/or the wax being 6% by mass or more, wherein

in the polyglycerol fatty acid ester, a content of a saturated fatty acid having carbon number of 16 to 18 is 90% or more relative to 100% of the constituent fatty acids,
the plastic fat composition contains 40% by mass or less of a saturated fatty acid having carbon number of 16 or more relative to a total mass of the constituent fatty acids in the plastic fat composition, and a difference in common logarithm numerical value of storage elastic moduli at 10°C and 30°C as determined by dynamic viscoelastic measurement is less than 1.0.

2. The plastic fat composition according to claim 1, wherein the plastic fat composition is used for a food.

3. The plastic fat composition according to claim 1, wherein the plastic fat composition is used for a cosmetic or industry.

4. A method for producing a plastic fat composition, the method comprising:

mixing 70% by mass or more of an oil that is liquid at 20°C with (A) 5 to 30% by mass of a polyglycerol fatty acid ester to give a mixture, or with (B) 3 to 12% by mass of a polyglycerol fatty acid ester and 2 to 10% by mass of an extreme hardened oil and/or a wax wherein a total content of the polyglycerol fatty acid ester and the extreme hardened oil and/or the wax being 6% by mass or more to give a mixture;
heating and melting the mixture; and
quenching and kneading the melted mixture, wherein
in the polyglycerol fatty acid ester, a content of a saturated fatty acid having carbon number of 16 to 18 is 90% or more relative to 100% of constituent fatty acids,
the plastic fat composition contains 40% by mass or less of a saturated fatty acid having carbon number of 16 or more relative to a total mass of the constituent fatty acids in the plastic fat composition, and a difference in common logarithm numerical value of storage elastic moduli at 10°C and 30°C as determined by dynamic viscoelastic measurement is less than 1.0.

[Fig.1]

DYNAMIC VISCOELASTIC MEASUREMENT

[Fig.2]

DYNAMIC VISCOELASTIC MEASUREMENT

Europäisches
Patentamt

European
Patent Office

Office européen
des brevets

# EUROPEAN SEARCH REPORT

Application Number

EP 20 19 8314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 3 751 265 A (SEIDEN P)<br>7 August 1973 (1973-08-07)<br>* column 2, line 22 - column 3, line 4 *<br>* column 3, lines 44-67 *<br>* examples I, II *<br>* claims 1,2,4 * | 1-3<br><br>4 | INV.<br>A23D9/013<br><br>ADD.<br>A23D9/00 |
| Y,D | JP 2013 110975 A (RIKEN VITAMIN CO)<br>10 June 2013 (2013-06-10)<br>* paragraphs [0001], [0004], [0011], [0014], [0036] *<br>* paragraphs [0065], [0066] *<br>* table 7 * | 4 | |
| A | GB 1 180 695 A (PROCTER & GAMBLE [US])<br>11 February 1970 (1970-02-11)<br>* page 1, lines 10-14 *<br>* page 2, lines 11-28, 69-118 *<br>* page 3, lines 3-11,34-47,124-125 *<br>* examples 6-8 * | 1-4 | |
| A | CN 110 029 025 A (CHENGDU JINMIJI BIOTECHNOLOGY CO LTD)<br>19 July 2019 (2019-07-19)<br>* claims 1,2 *<br>* example 1 * | 1-4 | TECHNICAL FIELDS SEARCHED (IPC)<br><br>A23D |

The present search report has been drawn up for all claims

| Place of search | Date of completion of the search | Examiner |
|---|---|---|
| Munich | 4 February 2021 | Couzy, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 8314

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2021

| Patent document cited in search report | | Publication date | Patent family member(s) | | Publication date |
|---|---|---|---|---|---|
| US 3751265 | A | 07-08-1973 | CA | 977204 A | 04-11-1975 |
| | | | GB | 1386260 A | 05-03-1975 |
| | | | US | 3751265 A | 07-08-1973 |
| JP 2013110975 | A | 10-06-2013 | NONE | | |
| GB 1180695 | A | 11-02-1970 | GB | 1180695 A | 11-02-1970 |
| | | | US | 3549383 A | 22-12-1970 |
| CN 110029025 | A | 19-07-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010011799 A
- WO 2010119781 A

- JP 4724094 B
- JP 2013110975 A

**Non-patent literature cited in the description**

- *Standard Methods for the Analysis of Fats, Oils and Related Materials, 2.4.2.3-2013*